# EUROPÄISCHE PATENTSCHRIFT

(11) **EP 3 248 356 B1**
(45) Veröffentlichungstag und Bekanntmachung des Hinweises auf die Patenterteilung: **03.06.2020**
(21) Anmeldenummer: 16700774.9
(22) Anmeldetag: 18.01.2016
(51) Int. Cl.: H04L 29/06, H04L 9/00, H04L 9/32

(54) **ZERTIFIKATS-TOKEN ZUM BEREITSTELLEN EINES DIGITALEN ZERTIFIKATS EINES NUTZERS**
CERTIFICATE TOKEN FOR PROVIDING A DIGITAL CERTIFICATE OF A USER
JETON DE CERTIFICAT PERMETTANT DE METTRE À DISPOSITION UN CERTIFICAT NUMÉRIQUE D'UN UTILISATEUR

(30) Priorität: 23.01.2015 DE 102015101011
(43) Veröffentlichungstag der Anmeldung: 29.11.2017
(73) Patentinhaber: Bundesdruckerei GmbH, 10969 Berlin (DE)
(72) Erfinder: MÖSER, Robert, 12167 Berlin (DE); WEISS, Niklas, 12489 Berlin (DE); MORGNER, Frank, 15537 Grünheide (DE); DREBES, Jürgen, 13591 Berlin (DE); BARTOCHA, Alexa, 10777 Berlin (DE); HOLINSKI, Denis, 13055 Berlin (DE)
(74) Vertreter: Patentship Patentanwaltsgesellschaft mbH
(86) Internationale Anmeldenummer: PCT/EP2016/050875
(87) Internationale Veröffentlichungsnummer: WO 2016/116394

(56) Entgegenhaltungen:
- EP-A1- 2 770 467
- EP-A2- 1 322 087
- US-A1- 2002 176 583
- US-A1- 2006 095 771
- NYSTROM B KALISKI RSA SECURITY M: "PKCS #10: Certification Request Syntax Specification Version 1.7; rfc2986.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1. November 2000 (2000-11-01), XP015008769, ISSN: 0000-0003

## Beschreibung

Die vorliegende Erfindung betrifft das Gebiet der Bereitstellung digitaler Zertifikate. Die Patentanmeldung US2002/176583A1 offenbart relevanten Stand der Technik. Die Erfindung wird durch die unabhängigen Ansprüche definiert.

Digitale Zertifikate werden im Bereich asymmetrischer kryptographischer Systeme eingesetzt, um einen öffentlichen kryptographischen Schlüssel einem Nutzer zuzuordnen. Der Nutzer kann unter Verwendung eines zugehörigen privaten kryptographischen Schlüssels eine Vielzahl verschiedener kryptographischer Funktionen, wie beispielsweise eine digitale Datenverschlüsselung oder eine digitale Datensignierung, nutzen.

Die Zuordnung zwischen dem öffentlichen kryptographischen Schlüssel und dem Nutzer kann durch einen Zertifizierungsdiensteanbieter (ZDA) beglaubigt werden. Dadurch kann die Authentizität der Zuordnung gegenüber weiteren Nutzern des asymmetrischen kryptographischen Systems bestätigt werden. Die digitalen Zertifikate sowie die zugehörigen kryptographischen Schlüssel können auf einem Zertifikats-Token des Nutzers, beispielsweise einer Smartcard, gespeichert werden.

Zur Bereitstellung eines digitalen Zertifikats wird zunächst eine Identifizierung des Nutzers durchgeführt. Die Identifizierung des Nutzers kann dabei durch den Zertifizierungsdiensteanbieter durchgeführt werden. Nach erfolgreicher Identifizierung des Nutzers wird das digitale Zertifikat unmittelbar erzeugt und auf das Zertifikats-Token des Nutzers aufgebracht. Bei einer Erneuerung des digitalen Zertifikats, beispielsweise aufgrund eines Wechsels des Zertifizierungsdiensteanbieters oder aufgrund eines zeitlichen Ablaufs der Gültigkeit des digitalen Zertifikats, wird jeweils ein neues digitales Zertifikat erzeugt. Dabei ist eine erneute Identifizierung des Nutzers erforderlich.

Die erneute Identifizierung des Nutzers ist jedoch mit hohem Aufwand für den Nutzer und den Zertifizierungsdiensteanbieter verbunden und schränkt den Nutzer in seiner Wahlfreiheit bezüglich des Zertifizierungsdiensteanbieters ein.

Es ist daher die Aufgabe der vorliegenden Erfindung, ein effizientes Konzept zum Bereitstellen eines digitalen Zertifikats eines Nutzers zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Figuren.

Die Erfindung basiert auf der Erkenntnis, dass die obige Aufgabe durch ein Zertifikats-Token eines Nutzers gelöst werden kann, welches einen Anforderungsdatensatz zur Übermittlung eines digitalen Zertifikats des Nutzers umfasst.

Der Anforderungsdatensatz umfasst ein signiertes Personendatum des Nutzers und einen öffentlichen Zertifikatsschlüssel des digitalen Zertifikats, wobei das signierte Personendatum durch einen Identifizierungsdienst signiert sein kann. Der Identifizierungsdienst kann beispielsweise eine Registrierungsstelle (Registration Authority, RA) sein. Der Anforderungsdatensatz kann zudem durch ein Produktionssystem, mit dem das Zertifikats-Token hergestellt wurde, signiert sein. Dadurch kann eine eindeutige und verifizierbare Zuordnung zwischen dem Nutzer, dem Produktionssystem und dem Zertifikats-Token realisiert werden.

Zur Bereitstellung eines digitalen Zertifikats des Nutzers kann der Anforderungsdatensatz von dem Zertifikats-Token an einen elektronischen Zertifizierungsdienst über ein Kommunikationsnetzwerk übertragen werden. Der elektronische Zertifizierungsdienst kann beispielweise ein Zertifizierungsdiensteanbieter (ZDA) oder eine Zertifizierungsstelle (Certification Authority, CA) sein. Der elektronische Zertifizierungsdienst kann auf Basis des Anforderungsdatensatzes das digitale Zertifikat des Nutzers bereitstellen. Dabei kann das signierte Personendatum des Nutzers und/oder der Anforderungsdatensatz durch den elektronischen Zertifizierungsdienst verifiziert werden und somit die Authentizität des Personendatums und/oder des Zertifikats-Tokens überprüft werden. Das digitale Zertifikat kann anschließend über das Kommunikationsnetzwerk an das Zertifikats-Token übertragen und dort gespeichert werden.

Zur erneuten Bereitstellung eines digitalen Zertifikats kann auf eine erneute Identifizierung des Nutzers und ein Vorhalten des Personendatums durch einen elektronischen Zertifizierungsdienst verzichtet werden. Die Bereitstellung des digitalen Zertifikats kann auf Basis des im Zertifikats-Token gespeicherten Anforderungsdatensatzes unter Verwendung eines beliebigen elektronischen Zertifizierungsdienstes durchgeführt werden.

Gemäß einem ersten Aspekt betrifft die Erfindung ein Zertifikats-Token zum Bereitstellen eines digitalen Zertifikats eines Nutzers, mit einem Speicher, welcher einen Anforderungsdatensatz zur Übermittlung des digitalen Zertifikats des Nutzers umfasst, wobei der Anforderungsdatensatz ein signiertes Personendatum des Nutzers und einen öffentlichen Zertifikatsschlüssel des digitalen Zertifikats umfasst, und einer Kommunikationsschnittstelle, welche ausgebildet ist, den Anforderungsdatensatz für die Übermittlung über ein Kommunikationsnetzwerk an einen elektronischen Zertifizierungsdienst bereitzustellen, und das digitale Zertifikat des Nutzers von dem elektronischen Zertifizierungsdienst zu empfangen, um das digitale Zertifikat bereitzustellen. Dadurch wird der Vorteil erreicht, dass ein effizientes Konzept zum Bereitstellen eines digitalen Zertifikats eines Nutzers realisiert werden kann.

Das Zertifikats-Token kann aktiv oder passiv sein. Das Zertifikats-Token kann beispielsweise eine Smartcard oder ein USB-Token sein. Das Zertifikats-Token kann einen elektronisch auslesbaren Schaltkreis umfassen. Das Zertifikats-Token kann in Hardware oder Software realisiert sein.

Das Zertifikats-Token kann ferner ein Identifikationsdokument des Nutzers sein. Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Der Speicher kann durch eine elektronische Speicherbaugruppe gebildet sein. Die Kommunikationsschnittstelle kann drahtlos oder drahtgebunden kommunizieren. Die Kommunikationsschnittstelle ist mit dem Speicher verbunden.

Das digitale Zertifikat kann ein Public-Key-Zertifikat sein. Das digitale Zertifikat kann das signierte Personendatum dem öffentlichen Zertifikatsschlüssel eindeutig zuordnen. Das digitale Zertifikat kann beispielsweise gemäß dem X.509 Standard formatiert sein.

Der Anforderungsdatensatz kann eine Zertifikatsregistrierungsanforderung (Certificate Signing Request, CSR) sein. Der Anforderungsdatensatz kann mit einem privaten Zertifikatsschlüssel signiert sein, welcher mit dem öffentlichen Zertifikatsschlüssel ein kryptographisches Schlüsselpaar bilden kann. Das signierte Personendatum kann beispielsweise einen Namen des Nutzers, eine Anschrift des Nutzers, und/oder eine Organisationszugehörigkeit des Nutzers umfassen. Der öffentliche Zertifikatsschlüssel kann dem digitalen Zertifikat zugeordnet sein.

Das Kommunikationsnetzwerk kann durch eine Mehrzahl von Servern gebildet sein. Das Kommunikationsnetzwerk kann beispielsweise das Internet sein. Der elektronische Zertifizierungsdienst kann beispielsweise ein Zertifizierungsdiensteanbieter (ZDA) oder eine Zertifizierungsstelle (Certification Authority, CA) sein. Der elektronische Zertifizierungsdienst kann auf Basis des Anforderungsdatensatzes das digitale Zertifikat des Nutzers bereitstellen.

Gemäß einer Ausführungsform erfolgt ein Zugriff auf den Speicher des Zertifikats-Tokens mittels eines Prozessors, welcher den Zugriff derart kontrolliert, dass ein Auslesen eines Inhalts des Speichers nur nach einer Durchführung eines kryptographischen Protokolls, wie beispielsweise einer Sicherheitsabfrage, wie beispielsweise einer PIN-Abfrage oder einer Challenge-Response-Abfrage erfolgen kann. Auf diese Weise kann der Zugriff auf den Speicher von außen, insbesondere über die Kommunikationsschnittstelle, reglementiert werden. Der Inhalt des Speichers kann ein kryptographischer Inhalt sein und beispielsweise einen privaten Zertifikatsschlüssel umfassen.

Gemäß einer Ausführungsform ist das Zertifikats-Token vorgesehen, kryptografische Funktionen wie beispielsweise das Signieren, beispielsweise durch Verschlüsselung eines Hashwertes mit dem privaten Schlüssel, auszuführen. Die kryptographischen Funktionen können innerhalb des Zertifikats-Tokens durch Operationen ausgeführt werden, die durch das Betriebssystem des Zertifikats-Tokens bereitgestellt werden können.

Gemäß einer Ausführungsform umfasst das Zertifikats-Token ein Betriebssystem, das zur Ausführung der kryptographischen Funktionen des Zertifikats-Tokens ausgeführt wird.

Gemäß einer Ausführungsform ist der Prozessor der Kommunikationsschnittstelle nachgeschaltet oder vorgeschaltet.

Gemäß einer Ausführungsform ist das signierte Personendatum mit einem privaten Signaturschlüssel eines Identifizierungsdienstes zum Identifizieren des Nutzers signiert. Dadurch wird der Vorteil erreicht, dass die Authentizität des Personendatums verifiziert werden kann.

Der Identifizierungsdienst kann beispielsweise eine Registrierungsstelle (Registration Authority, RA) sein. Der private Signaturschlüssel des Identifizierungsdienstes kann mit einem öffentlichen Signaturprüfschlüssel des Identifizierungsdienstes ein kryptographisches Schlüsselpaar bilden. Das signierte Personendatum kann mittels des öffentlichen Signaturprüfschlüssels des Identifizierungsdienstes verifiziert werden.

Gemäß einer Ausführungsform ist der Anforderungsdatensatz mit einem privaten Signaturschlüssel eines Produktionssystems, mit dem das Zertifikats-Token hergestellt wurde, signiert. Dadurch wird der Vorteil erreicht, dass die Authentizität des Anforderungsdatensatzes und/oder des Zertifikats-Tokens verifiziert werden kann.

Das Produktionssystem kann zur erstmaligen Personalisierung des Zertifikats-Tokens des Nutzers vorgesehen sein. Der private Signaturschlüssel des Produktionssystems kann mit einem öffentlichen Signaturprüfschlüssel des Produktionssystems ein kryptographisches Schlüsselpaar bilden. Der Anforderungsdatensatz kann mittels des öffentlichen Signaturprüfschlüssels des Produktionssystems verifiziert werden.

Gemäß einer Ausführungsform umfasst der Speicher ferner einen privaten Zertifikatsschlüssel des digitalen Zertifikats, wobei der private Zertifikatsschlüssel und der öffentliche Zertifikatsschlüssel ein kryptographisches Schlüsselpaar bilden. Dadurch wird der Vorteil erreicht, dass kryptographische Funktionen, wie beispielsweise eine digitale Datenverschlüsselung oder eine digitale Datensignierung, unter Verwendung des Zertifikats-Tokens realisiert werden können.

Der private Zertifikatsschlüssel kann zur Verschlüsselung und/oder Signierung von Daten des Nutzers eingesetzt werden. Der private Zertifikatsschlüssel kann dem digitalen Zertifikat zugeordnet sein.

Gemäß einer Ausführungsform ist dem Zertifikats-Token eine Identifikationskennung zugeordnet, wobei der Anforderungsdatensatz die Identifikationskennung des Zertifikats-Tokens umfasst. Dadurch wird der Vorteil erreicht, dass das Zertifikats-Token durch den elektronischen Zertifizierungsdienst identifiziert werden kann.

Die Identifikationskennung kann eine Seriennummer eines elektronisch auslesbaren Schaltkreises des Zertifikats-Tokens sein. Die Identifikationskennung kann eine Chipseriennummer (Integrated Circuit Card Serial Number, ICCSN) sein.

Gemäß einer Ausführungsform umfasst der Speicher ferner einen weiteren Anforderungsdatensatz zur Übermittlung eines weiteren digitalen Zertifikats des Nutzers, wobei das signierte Personendatum des Nutzers ferner dem weiteren Anforderungsdatensatz zugeordnet ist. Dadurch wird der Vorteil erreicht, dass das signierte Personendatum durch den weiteren Anforderungsdatensatz verwendet werden kann.

Das weitere digitale Zertifikat kann ein Public-Key-Zertifikat sein. Das weitere digitale Zertifikat kann das signierte Personendatum einem weiteren öffentlichen Zertifikatsschlüssel eindeutig zuordnen. Das weitere digitale Zertifikat kann beispielsweise gemäß dem X.509 Standard formatiert sein.

Der weitere Anforderungsdatensatz kann eine Zertifikatsregistrierungsanforderung (Certificate Signing Request, CSR) sein. Der weitere Anforderungsdatensatz kann mit einem weiteren privaten Zertifikatsschlüssel signiert sein, welcher mit dem weiteren öffentlichen Zertifikatsschlüssel ein kryptographisches Schlüsselpaar bilden kann. Der weitere öffentliche Zertifikatsschlüssel kann dem weiteren digitalen Zertifikat zugeordnet sein. Der weitere Anforderungsdatensatz kann eine Referenz auf den Anforderungsdatensatz und/oder das signierte Personendatum umfassen.

Gemäß einer Ausführungsform ist das Zertifikats-Token ausgebildet, den öffentlichen Zertifikatsschlüssel des digitalen Zertifikats zu erzeugen. Dadurch wird der Vorteil erreicht, dass der öffentliche Zertifikatsschlüssel unabhängig von dem Produktionssystem, mit dem das Zertifikats-Token hergestellt wurde, durch das Zertifikats-Token erzeugt werden kann.

Gemäß einer Ausführungsform ist das Zertifikats-Token ausgebildet, einen privaten Zertifikatsschlüssel des digitalen Zertifikats zu erzeugen, wobei der öffentliche Zertifikatsschlüssel und der private Zertifikatsschlüssel ein kryptographisches Schlüsselpaar bilden. Dadurch wird der Vorteil erreicht, dass der private Zertifikatsschlüssel unabhängig von dem Produktionssystem, mit dem das Zertifikats-Token hergestellt wurde, durch das Zertifikats-Token erzeugt werden kann.

Gemäß einem zweiten Aspekt betrifft die Erfindung ein Verfahren zum Bereitstellen eines digitalen Zertifikats eines Nutzers unter Verwendung des Zertifikats-Tokens und eines elektronischen Zertifizierungsdienstes, wobei das Zertifikats-Token einen Speicher umfasst, welcher einen Anforderungsdatensatz zur Übermittlung des digitalen Zertifikats des Nutzers umfasst, wobei der Anforderungsdatensatz ein signiertes Personendatum des Nutzers und einen öffentlichen Zertifikatsschlüssel des digitalen Zertifikats umfasst, wobei das Zertifikats-Token ferner eine Kommunikationsschnittstelle umfasst, welche ausgebildet ist, den Anforderungsdatensatz für die Übermittlung über ein Kommunikationsnetzwerk an den elektronischen Zertifizierungsdienst bereitzustellen, und das digitale Zertifikat des Nutzers von dem elektronischen Zertifizierungsdienst zu empfangen, um das digitale Zertifikat bereitzustellen, und wobei das Verfahren die folgenden Schritte umfasst: Bereitstellen des Anforderungsdatensatzes durch die Kommunikationsschnittstelle des Zertifikats-Tokens, Übertragen des bereitgestellten Anforderungsdatensatzes zu dem elektronischen Zertifizierungsdienst über das Kommunikationsnetzwerk, Erzeugen des digitalen Zertifikats des Nutzers durch den elektronischen Zertifizierungsdienst auf Basis des Anforderungsdatensatzes, Aussenden des digitalen Zertifikats des Nutzers durch den elektronischen Zertifizierungsdienst an das Zertifikats-Token, und Speichern des digitalen Zertifikats des Nutzers in dem Speicher des Zertifikats-Tokens. Dadurch wird der Vorteil erreicht, dass ein effizientes Konzept zum Bereitstellen eines digitalen Zertifikats eines Nutzers realisiert werden kann.

Das Verfahren zum Bereitstellen eines digitalen Zertifikats eines Nutzers kann mittels des Zertifikats-Tokens zum Bereitstellen eines digitalen Zertifikats eines Nutzers durchgeführt werden. Weitere Merkmale des Verfahrens zum Bereitstellen eines digitalen Zertifikats eines Nutzers ergeben sich unmittelbar aus der Funktionalität des Zertifikats-Tokens zum Bereitstellen eines digitalen Zertifikats eines Nutzers.

Gemäß einer Ausführungsform wird der bereitgestellte Anforderungsdatensatz im Schritt des Bereitstellens an den elektronischen Zertifizierungsdienst über das Kommunikationsnetzwerk durch die Kommunikationsschnittstelle ausgesendet, oder wird der bereitgestellte Anforderungsdatensatz im Schritt des Bereitstellens durch den elektronischen Zertifizierungsdienst über das Kommunikationsnetzwerk über die Kommunikationsschnittstelle ausgelesen. Dadurch wird der Vorteil erreicht, dass der Anforderungsdatensatz unter Verwendung aktiver oder passiver Zertifikats-Token an den elektronischen Zertifizierungsdienst übertragen werden kann.

Gemäß einer Ausführungsform ist das signierte Personendatum mit einem privaten Signaturschlüssel eines Identifizierungsdienstes zum Identifizieren des Nutzers signiert, wobei das Erzeugen des digitalen Zertifikats des Nutzers durch den elektronischen Zertifizierungsdienst ein Verifizieren des signierten Personendatums des Nutzers mittels eines öffentlichen Signaturprüfschlüssels des Identifizierungsdienstes durch den elektronischen Zertifizierungsdienst umfasst. Dadurch wird der Vorteil erreicht, dass die Authentizität des Personendatums durch den elektronischen Zertifizierungsdienst verifiziert werden kann.

Gemäß einer Ausführungsform ist der Anforderungsdatensatz mit einem privaten Signaturschlüssel eines Produktionssystems, mit dem das Zertifikats-Token hergestellt wurde, signiert, wobei das Erzeugen des digitalen Zertifikats des Nutzers durch den elektronischen Zertifizierungsdienst ein Verifizieren des Anforderungsdatensatzes mittels eines öffentlichen Signaturprüfschlüssels des Produktionssystems durch den elektronischen Zertifizierungsdienst umfasst. Dadurch wird der Vorteil erreicht, dass die Authentizität des Anforderungsdatensatzes und/oder des Zertifikats-Tokens durch den elektronischen Zertifizierungsdienst verifiziert werden kann.

Gemäß einer Ausführungsform erfolgt ein Zugriff auf den Speicher des Zertifikats-Tokens mittels eines Prozessors, welcher den Zugriff derart kontrolliert, dass ein Auslesen eines Inhalts des Speichers nur nach einer Durchführung eines kryptographischen Protokolls, wie beispielsweise einer Sicherheitsabfrage, wie beispielsweise einer PIN-Abfrage oder einer Challenge-Response-Abfrage erfolgen kann. Auf diese Weise kann der Zugriff auf den Speicher von außen, insbesondere über die Kommunikationsschnittstelle, reglementiert werden. Der Inhalt des Speichers kann ein kryptographischer Inhalt sein und beispielsweise einen privaten Zertifikatsschlüssel umfassen.

Gemäß einer Ausführungsform ist das Zertifikats-Token vorgesehen, kryptografische Funktionen wie beispielsweise das Signieren, beispielsweise durch Verschlüsselung eines Hashwertes mit dem privaten Schlüssel, auszuführen. Die kryptographischen Funktionen können innerhalb des Zertifikats-Tokens durch Operationen ausgeführt werden, die durch das Betriebssystem des Zertifikats-Tokens bereitgestellt werden können.

Gemäß einer Ausführungsform umfasst das Zertifikats-Token ein Betriebssystem, das zur Ausführung der kryptographischen Funktionen des Zertifikats-Tokens ausgeführt wird. Gemäß einem dritten Aspekt betrifft die Erfindung eine Prozessorkarte mit dem Zertifikats-Token und einem Prozessor, welcher der Kommunikationsschnittstelle nachgeschaltet oder vorgeschaltet ist. Dadurch erfolgt ein Zugriff auf den Speicher des Zertifikats-Tokens mittels eines Prozessors, welcher den Zugriff derart kontrolliert, dass ein Auslesen eines Inhalts des Speichers des Zertifikats-Tokens nur nach einer Durchführung eines kryptographischen Protokolls, wie beispielsweise einer Sicherheitsabfrage, wie beispielsweise einer PIN-Abfrage oder einer Challenge-Response-Abfrage erfolgen kann. Auf diese Weise kann der Zugriff auf den Speicher von außen, insbesondere über die Kommunikationsschnittstelle, reglementiert werden. Der Inhalt des Speichers kann ein kryptographischer Inhalt sein und beispielsweise einen privaten Zertifikatsschlüssel umfassen.

Gemäß einer Ausführungsform wird das Verfahren zum Bereitstellen des digitalen Zertifikats mittels der Prozessorkarte ausgeführt.

Gemäß einem vierten Aspekt betrifft die Erfindung ein Verfahren zum Herstellen eines Zertifikats-Tokens eines Nutzers unter Verwendung eines Identifizierungsdienstes und eines Produktionssystems, wobei dem Nutzer ein Personendatum zugeordnet ist, mit einem Signieren des Personendatums des Nutzers durch den Identifizierungsdienst mit einem privaten Signaturschlüssels des Identifizierungsdienstes, um ein signiertes Personendatum des Nutzers zu erhalten, einem Erzeugen eines öffentlichen Zertifikatsschlüssels eines digitalen Zertifikats, einem Erzeugen eines Anforderungsdatensatzes durch das Produktionssystem, wobei der Anforderungsdatensatz das signierte Personendatum des Nutzers und den öffentlichen Zertifikatsschlüssel des digitalen Zertifikats umfasst, und einem Speichern des Anforderungsdatensatzes in dem Zertifikats-Token durch das Produktionssystem, um das Zertifikats-Token herzustellen. Dadurch wird der Vorteil erreicht, dass ein effizientes Konzept zum Bereitstellen eines digitalen Zertifikats eines Nutzers realisiert werden kann.

Der Identifizierungsdienst kann beispielsweise eine Registrierungsstelle (Registration Authority, RA) sein. Das Produktionssystem kann zur erstmaligen Personalisierung des Zertifikats-Tokens des Nutzers vorgesehen sein.

Das Zertifikats-Token zum Bereitstellen eines digitalen Zertifikats eines Nutzers kann mittels des Verfahrens zum Herstellen eines Zertifikats-Tokens eines Nutzers effizient hergestellt werden. Weitere Merkmale des Verfahrens zum Herstellen eines Zertifikats-Tokens eines Nutzers ergeben sich unmittelbar aus der Funktionalität des Zertifikats-Tokens zum Bereitstellen eines digitalen Zertifikats eines Nutzers, und/oder der Funktionalität des Verfahrens zum Bereitstellen eines digitalen Zertifikats eines Nutzers.

Gemäß einer Ausführungsform umfasst das Erzeugen des Anforderungsdatensatzes durch das Produktionssystem ein Signieren des Anforderungsdatensatzes durch das Produktionssystem mit einem privaten Signaturschlüssel des Produktionssystems. Dadurch wird der Vorteil erreicht, dass die Authentizität des Anforderungsdatensatzes und/oder des Zertifikats-Tokens verifiziert werden kann.

Gemäß einer Ausführungsform umfasst das Verfahren ein Auslesen einer Identifikationskennung des Zertifikats-Tokens durch das Produktionssystem aus dem Zertifikats-Token, wobei das Erzeugen des Anforderungsdatensatzes durch das Produktionssystem unter Verwendung der Identifikationskennung des Zertifikats-Tokens durchgeführt wird. Dadurch wird der Vorteil erreicht, dass der Anforderungsdatensatz dem Zertifikats-Token zugeordnet werden kann. Der Anforderungsdatensatz kann die Identifikationskennung des Zertifikats-Tokens umfassen.

Gemäß einer Ausführungsform wird das Erzeugen des öffentlichen Zertifikatsschlüssels des digitalen Zertifikats durch das Zertifikats-Token durchgeführt, wobei das Verfahren ferner ein Übertragen des erzeugten öffentlichen Zertifikatsschlüssels von dem Zertifikats-Token an das Produktionssystem umfasst. Dadurch wird der Vorteil erreicht, dass der öffentliche Zertifikatsschlüssel unabhängig von dem Produktionssystem durch das Zertifikats-Token erzeugt werden kann.

Gemäß einer Ausführungsform erfolgt ein Zugriff auf den Speicher des Zertifikats-Tokens mittels eines Prozessors, welcher den Zugriff derart kontrolliert, dass ein Auslesen eines Inhalts des Speichers nur nach einer Durchführung eines kryptographischen Protokolls, wie beispielsweise einer Sicherheitsabfrage, wie beispielsweise einer PIN-Abfrage oder einer Challenge-Response-Abfrage erfolgen kann. Auf diese Weise kann der Zugriff auf den Speicher von außen, insbesondere über die Kommunikationsschnittstelle, reglementiert werden. Der Inhalt des Speichers kann ein kryptographischer Inhalt sein und beispielsweise einen privaten Zertifikatsschlüssel umfassen.

Gemäß einer Ausführungsform ist das Zertifikats-Token vorgesehen, kryptografische Funktionen wie beispielsweise das Signieren, beispielsweise durch Verschlüsselung eines Hashwertes mit dem privaten Schlüssel, auszuführen. Die Kryptographischen Funktionen werden daher innerhalb des Zertifikats-Token ausgeführt durch Operationen ausgeführt, die durch das Betriebssystem des Zertifikats-Tokens bereitgestellt werden können.

Gemäß einem fünften Aspekt betrifft die Erfindung ein Computerprogramm mit einem Programmcode zum Ausführen des Verfahrens zum Bereitstellen eines digitalen Zertifikats eines Nutzers, wenn der Programmcode auf einem Computer ausgeführt wird. Dadurch wird der Vorteil erreicht, dass das Verfahren automatisiert ausgeführt werden kann.

Der Programmcode kann eine Folge von Befehlen für einen Prozessor des Computers umfassen. Der Programmcode kann in maschinen-lesbarer Form vorliegen.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm eines Zertifikats-Tokens zum Bereitstellen eines digitalen Zertifikats eines Nutzers;
- Fig. 2: ein schematisches Diagramm eines Systems zum Bereitstellen eines digitalen Zertifikats eines Nutzers;
- Fig. 3: ein schematisches Diagramm eines Systems zum Herstellen eines Zertifikats-Tokens eines Nutzers;
- Fig. 4: ein schematisches Diagramm eines Verfahrens zum Bereitstellen eines digitalen Zertifikats eines Nutzers;
- Fig. 5: ein schematisches Diagramm eines Verfahrens zum Herstellen eines Zertifikats-Tokens eines Nutzers; und
- Fig. 6: ein schematisches Diagramm eines Verfahrens zum Bereitstellen eines digitalen Zertifikats eines Nutzers und eines Verfahrens zum Herstellen eines Zertifikats-Tokens eines Nutzers.

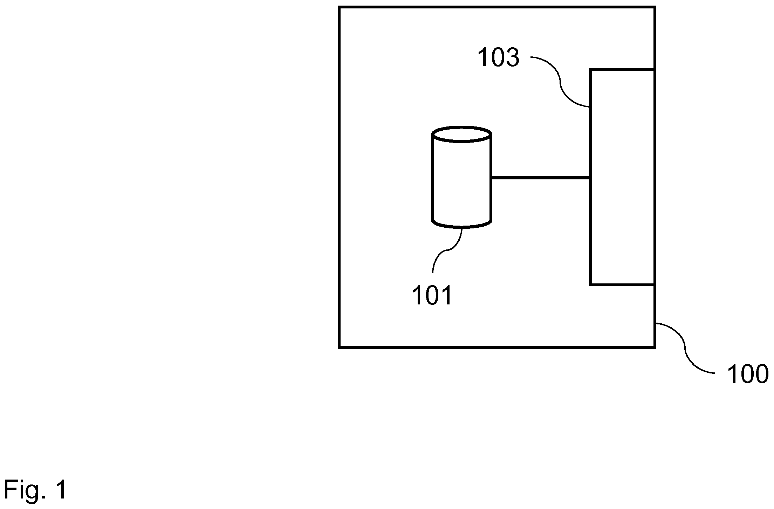

Fig. 1 zeigt ein schematisches Diagramm eines Zertifikats-Tokens 100 zum Bereitstellen eines digitalen Zertifikats eines Nutzers. Das Zertifikats-Token 100 umfasst einen Speicher 101, welcher einen Anforderungsdatensatz zur Übermittlung des digitalen Zertifikats des Nutzers umfasst, wobei der Anforderungsdatensatz ein signiertes Personendatum des Nutzers und einen öffentlichen Zertifikatsschlüssel des digitalen Zertifikats umfasst, und eine Kommunikationsschnittstelle 103, welche ausgebildet ist, den Anforderungsdatensatz für die Übermittlung über ein Kommunikationsnetzwerk an einen elektronischen Zertifizierungsdienst bereitzustellen, und das digitale Zertifikat des Nutzers von dem elektronischen Zertifizierungsdienst zu empfangen, um das digitale Zertifikat bereitzustellen.

Das Zertifikats-Token 100 kann aktiv oder passiv sein. Das Zertifikats-Token 100 kann beispielsweise eine Smartcard oder ein USB-Token sein. Das Zertifikats-Token 100 kann einen elektronisch auslesbaren Schaltkreis umfassen. Das Zertifikats-Token 100 kann in Hardware oder Software realisiert sein.

Das Zertifikats-Token 100 kann ferner ein Identifikationsdokument des Nutzers sein. Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Der Speicher 101 kann durch eine elektronische Speicherbaugruppe gebildet sein. Die Kommunikationsschnittstelle 103 kann drahtlos oder drahtgebunden kommunizieren. Die Kommunikationsschnittstelle 103 ist mit dem Speicher 101 verbunden.

Das digitale Zertifikat kann ein Public-Key-Zertifikat sein. Das digitale Zertifikat kann das signierte Personendatum dem öffentlichen Zertifikatsschlüssel eindeutig zuordnen. Das digitale Zertifikat kann beispielsweise gemäß dem X.509 Standard formatiert sein.

Der Anforderungsdatensatz kann eine Zertifikatsregistrierungsanforderung (Certificate Signing Request, CSR) sein. Der Anforderungsdatensatz kann mit einem privaten Zertifikatsschlüssel signiert sein, welcher mit dem öffentlichen Zertifikatsschlüssel ein kryptographisches Schlüsselpaar bilden kann. Das signierte Personendatum kann beispielsweise einen Namen des Nutzers, eine Anschrift des Nutzers, und/oder eine Organisationszugehörigkeit des Nutzers umfassen. Der öffentliche Zertifikatsschlüssel kann dem digitalen Zertifikat zugeordnet sein.

Das Kommunikationsnetzwerk kann durch eine Mehrzahl von Servern gebildet sein. Das Kommunikationsnetzwerk kann beispielsweise das Internet sein. Der elektronische Zertifizierungsdienst kann beispielsweise ein Zertifizierungsdiensteanbieter (ZDA) oder eine Zertifizierungsstelle (Certification Authority, CA) sein. Der elektronische Zertifizierungsdienst kann auf Basis des Anforderungsdatensatzes das digitale Zertifikat des Nutzers bereitstellen.

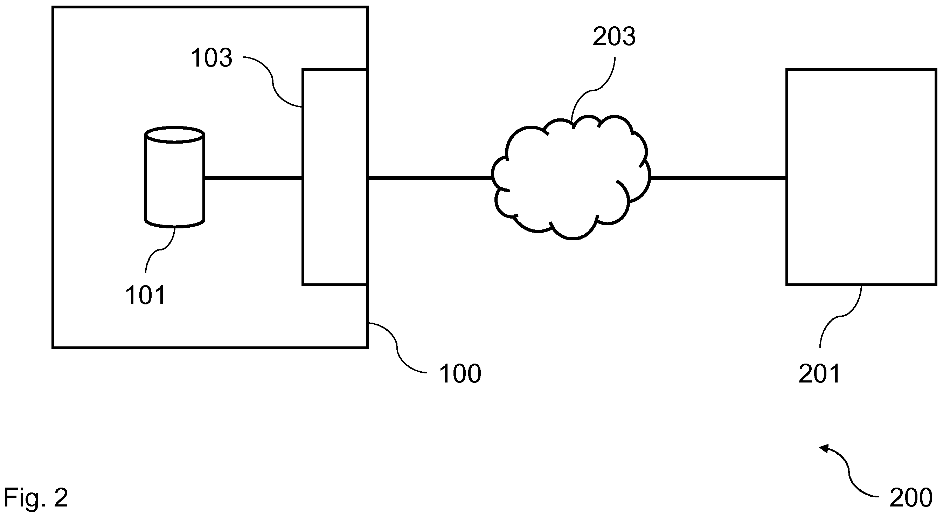

Fig. 2 zeigt ein schematisches Diagramm eines Systems 200 zum Bereitstellen eines digitalen Zertifikats eines Nutzers. Das System 200 umfasst ein Zertifikats-Token 100, einen elektronischen Zertifizierungsdienst 201, und ein Kommunikationsnetzwerk 203. Das Zertifikats-Token 100 umfasst einen Speicher 101, welcher einen Anforderungsdatensatz zur Übermittlung des digitalen Zertifikats des Nutzers umfasst, wobei der Anforderungsdatensatz ein signiertes Personendatum des Nutzers und einen öffentlichen Zertifikatsschlüssel des digitalen Zertifikats umfasst, und eine Kommunikationsschnittstelle 103, welche ausgebildet ist, den Anforderungsdatensatz für die Übermittlung über das Kommunikationsnetzwerk 203 an den elektronischen Zertifizierungsdienst 201 bereitzustellen, und das digitale Zertifikat des Nutzers von dem elektronischen Zertifizierungsdienst 201 zu empfangen, um das digitale Zertifikat bereitzustellen.

Der elektronische Zertifizierungsdienst 201 kann beispielsweise ein Zertifizierungsdiensteanbieter (ZDA) oder eine Zertifizierungsstelle (Certification Authority, CA) sein. Der elektronische Zertifizierungsdienst 201 kann auf Basis des Anforderungsdatensatzes das digitale Zertifikat des Nutzers bereitstellen. Das Kommunikationsnetzwerk 203 kann durch eine Mehrzahl von Servern gebildet sein. Das Kommunikationsnetzwerk 203 kann beispielsweise das Internet sein.

Das Bereitstellen des digitalen Zertifikats des Nutzers kann folgendermaßen realisiert werden. Der Anforderungsdatensatz kann durch die Kommunikationsschnittstelle 103 des Zertifikats-Tokens 100 bereitgestellt werden. Der bereitgestellte Anforderungsdatensatz kann an den elektronischen Zertifizierungsdienst 201 über das Kommunikationsnetzwerk 203 durch die Kommunikationsschnittstelle 103 ausgesendet werden, oder durch den elektronischen Zertifizierungsdienst 201 über das Kommunikationsnetzwerk 203 über die Kommunikationsschnittstelle 103 ausgelesen werden. Der bereitgestellte Anforderungsdatensatz kann zu dem elektronischen Zertifizierungsdienst 201 über das Kommunikationsnetzwerk 203 übertragen werden.

Das signierte Personendatum kann mit einem privaten Signaturschlüssel eines Identifizierungsdienstes zum Identifizieren des Nutzers signiert sein, wobei das signierte Personendatum des Nutzers mittels eines öffentlichen Signaturprüfschlüssels des Identifizierungsdienstes durch den elektronischen Zertifizierungsdienst 201 verifiziert werden kann. Zudem kann der Anforderungsdatensatz mit einem privaten Signaturschlüssel eines Produktionssystems, mit dem das Zertifikats-Token 100 hergestellt wurde, signiert sein, wobei der Anforderungsdatensatz mittels eines öffentlichen Signaturprüfschlüssels des Produktionssystems durch den elektronischen Zertifizierungsdienst 201 verifiziert werden kann. Das digitale Zertifikat des Nutzers kann bei erfolgreicher Verifizierung des signierten Personendatums und/oder des Anforderungsdatensatzes durch den elektronischen Zertifizierungsdienst 201 auf Basis des Anforderungsdatensatzes erzeugt werden.

Das digitale Zertifikat des Nutzers kann anschließend durch den elektronischen Zertifizierungsdienst 201 an das Zertifikats-Token 100 ausgesendet werden. Das digitale Zertifikat des Nutzers kann in dem Speicher 101 des Zertifikats-Tokens 100 gespeichert werden.

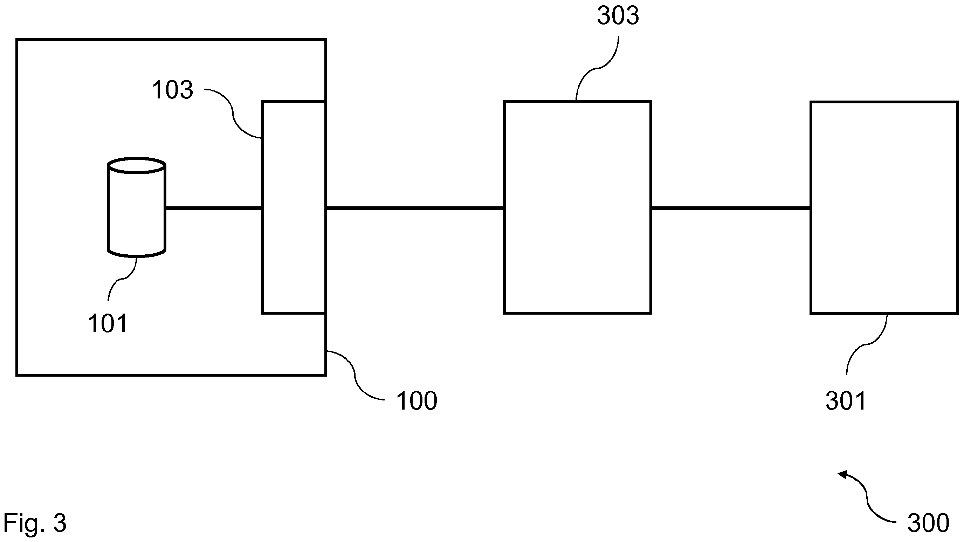

Fig. 3 zeigt ein schematisches Diagramm eines Systems 300 zum Herstellen eines Zertifikats-Tokens 100 eines Nutzers. Das System 300 umfasst das Zertifikats-Token 100, einen Identifizierungsdienst 301, und ein Produktionssystem 303. Das Zertifikats-Token 100 umfasst einen Speicher 101 und eine Kommunikationsschnittstelle 103.

Der Identifizierungsdienst 301 kann beispielsweise eine Registrierungsstelle (Registration Authority, RA) sein. Das Produktionssystem 303 kann zur erstmaligen Personalisierung des Zertifikats-Tokens 100 des Nutzers vorgesehen sein.

Das Zertifikats-Token 100 des Nutzers kann unter Verwendung des Identifizierungsdienstes 301 und des Produktionssystems 303 hergestellt werden, wobei dem Nutzer ein Personendatum zugeordnet sein kann. Das Herstellen des Zertifikats-Tokens 100 des Nutzers kann folgendermaßen realisiert werden. Der Nutzer kann durch den Identifizierungsdienst 301 identifiziert werden, um das Personendatum zu erfassen und dem Nutzer zuzuordnen. Das Personendatum des Nutzers kann durch den Identifizierungsdienst 301 mit einem privaten Signaturschlüssels des Identifizierungsdienstes 301 signiert werden, um ein signiertes Personendatum des Nutzers zu erhalten.

Anschließend kann ein öffentlicher Zertifikatsschlüssel eines digitalen Zertifikats erzeugt werden. Das Erzeugen des öffentlichen Zertifikatsschlüssels des digitalen Zertifikats kann dabei durch das Zertifikats-Token 100 durchgeführt werden, wobei der erzeugte öffentliche Zertifikatsschlüssel von dem Zertifikats-Token 100 an das Produktionssystem 303 übertragen werden kann.

Daraufhin kann ein Anforderungsdatensatz durch das Produktionssystem 303 erzeugt werden, wobei der Anforderungsdatensatz das signierte Personendatum des Nutzers und den öffentlichen Zertifikatsschlüssel des digitalen Zertifikats umfasst. Das Produktionssystem 303 kann ferner eine Identifikationskennung des Zertifikats-Tokens 100 aus dem Zertifikats-Token 100 auslesen, und den Anforderungsdatensatz unter Verwendung der Identifikationskennung des Zertifikats-Tokens 100 erzeugen. Das Produktionssystem 303 kann ferner den Anforderungsdatensatz mit einem privaten Signaturschlüssel des Produktionssystems 303 signieren.

Der Anforderungsdatensatz kann schließlich in dem Zertifikats-Token 100 durch das Produktionssystem 303 gespeichert werden, um das Zertifikats-Token herzustellen.

Gemäß einer Ausführungsform erfolgt ein Zugriff auf den Speicher 101 des Zertifikats-Tokens 100 mittels eines nicht dargestellten Prozessors, welcher den Zugriff derart kontrolliert, dass ein Auslesen eines Inhalts des Speichers 101 nur nach einer Durchführung eines kryptographischen Protokolls, wie beispielsweise einer Sicherheitsabfrage oder einer PIN-Abfrage oder einer Challenge-Response-Abfrage erfolgen kann. Auf diese Weise kann der Zugriff auf den Speicher 100 von außen, insbesondere über die Kommunikationsschnittstelle 103, reglementiert bzw. unterbunden werden. Der Inhalt des Speichers 101 kann ein kryptographischer Inhalt sein und beispielsweise einen privaten Zertifikatsschlüssel umfassen.

Gemäß einer Ausführungsform ist das Zertifikats-Token 100 vorgesehen, kryptografische Funktionen wie beispielsweise das Signieren, beispielsweise durch Verschlüsselung eines Hashwertes mit dem privaten Schlüssel, auszuführen. Die kryptographischen Funktionen können innerhalb des Zertifikats-Tokens 100 durch Operationen ausgeführt werden, die durch das Betriebssystem des Zertifikats-Tokens 100 bereitgestellt werden können.

Das Zertifikats-Token 100 kann zusammen mit dem Speicher 101, der Kommunikationsschnittstelle 103 und dem vorstehend erwähnten Prozessor auf einer Prozessorkarte implementiert werden.

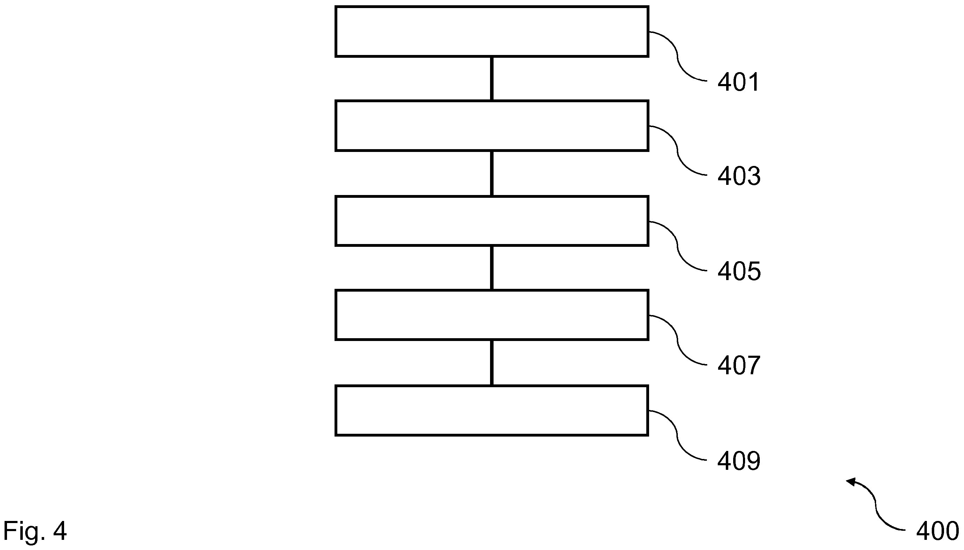

Fig. 4 zeigt ein schematisches Diagramm eines Verfahrens 400 zum Bereitstellen eines digitalen Zertifikats eines Nutzers. Das Verfahren 400 wird unter Verwendung des Zertifikats-Tokens und eines elektronischen Zertifizierungsdienstes durchgeführt, wobei das Zertifikats-Token einen Speicher umfasst, welcher einen Anforderungsdatensatz zur Übermittlung des digitalen Zertifikats des Nutzers umfasst, wobei der Anforderungsdatensatz ein signiertes Personendatum des Nutzers und einen öffentlichen Zertifikatsschlüssel des digitalen Zertifikats umfasst, wobei das Zertifikats-Token ferner eine Kommunikationsschnittstelle umfasst, welche ausgebildet ist, den Anforderungsdatensatz für die Übermittlung über ein Kommunikationsnetzwerk an den elektronischen Zertifizierungsdienst bereitzustellen, und das digitale Zertifikat des Nutzers von dem elektronischen Zertifizierungsdienst zu empfangen, um das digitale Zertifikat bereitzustellen.

Das Verfahren 400 umfasst die folgenden Schritte eines Bereitstellens 401 des Anforderungsdatensatzes durch die Kommunikationsschnittstelle des Zertifikats-Tokens, eines Übertragens 403 des bereitgestellten Anforderungsdatensatzes zu dem elektronischen Zertifizierungsdienst über das Kommunikationsnetzwerk, eines Erzeugens 405 des digitalen Zertifikats des Nutzers durch den elektronischen Zertifizierungsdienst auf Basis des Anforderungsdatensatzes, eines Aussendens 407 des digitalen Zertifikats des Nutzers durch den elektronischen Zertifizierungsdienst an das Zertifikats-Token, und eines Speicherns 409 des digitalen Zertifikats des Nutzers in dem Speicher des Zertifikats-T okens.

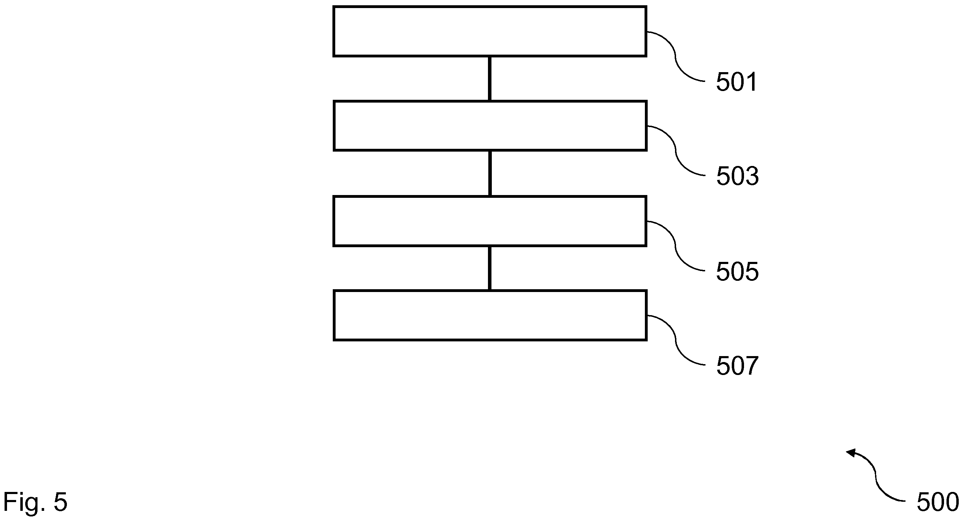

Fig. 5 zeigt ein schematisches Diagramm eines Verfahrens 500 zum Herstellen eines Zertifikats-Tokens eines Nutzers. Das Verfahren 500 wird unter Verwendung eines Identifizierungsdienstes und eines Produktionssystems durchgeführt, wobei dem Nutzer ein Personendatum zugeordnet ist.

Das Verfahren 500 umfasst ein Signieren 501 des Personendatums des Nutzers durch den Identifizierungsdienst mit einem privaten Signaturschlüssels des Identifizierungsdienstes, um ein signiertes Personendatum des Nutzers zu erhalten, ein Erzeugen 503 eines öffentlichen Zertifikatsschlüssels eines digitalen Zertifikats, ein Erzeugen 505 eines Anforderungsdatensatzes durch das Produktionssystem, wobei der Anforderungsdatensatz das signierte Personendatum des Nutzers und den öffentlichen Zertifikatsschlüssel des digitalen Zertifikats umfasst, und ein Speichern 507 des Anforderungsdatensatzes in dem Zertifikats-Token durch das Produktionssystem, um das Zertifikats-Token herzustellen.

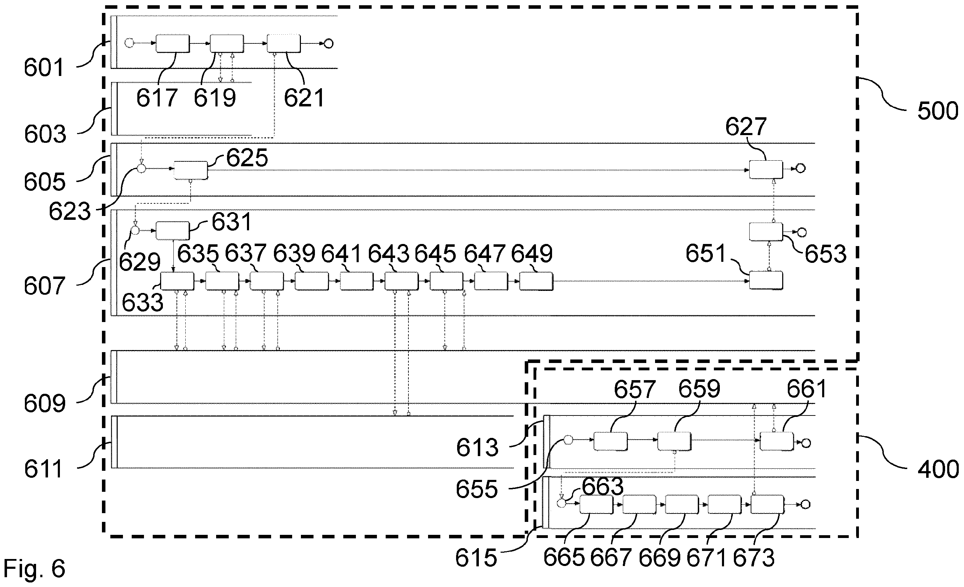

Fig. 6 zeigt ein schematisches Diagramm eines Verfahrens 400 zum Bereitstellen eines digitalen Zertifikats eines Nutzers und eines Verfahrens 500 zum Herstellen eines Zertifikats-Tokens eines Nutzers. Das Diagramm umfasst eine Erfassungseinrichtung 601, welche durch eine Erfassungssoftware realisiert werden kann, einen RA-Client 603, eine Personalisierungsmanagementeinrichtung 605, eine Personalisierungseinrichtung 607, welche durch eine Personalisierungsmaschine und/oder eine Personalisierungssoftware realisiert werden kann, ein Dokument 609, welches ein Token oder Zertifikats-Token sein kann, einen Signaturserver 611, eine Middleware 613, ein Trustcenter 615, welches eine Zertifizierungsstelle (Certification Authority, CA) sein kann, und Verfahrensschritte 617-673.

Das Dokument 609 und die Middleware 613 bilden das Zertifikats-Token 100. Das Trustcenter 615 bildet den elektronischen Zertifizierungsdienst 201. Die Erfassungseinrichtung 601 und der RA-Client 603 bilden den Identifizierungsdienst 301. Die Personalisierungsmanagementeinrichtung 605, die Personalisierungseinrichtung 607, und der Signaturserver 611 bilden das Produktionssystem 303.

Die Verfahrensschritte 617-653 bilden das Verfahren 500 zum Herstellen eines Zertifikats-Tokens eines Nutzers. In Verfahrensschritt 617 werden Personendaten erfasst, in Verfahrensschritt 619 werden die Personendaten signiert, und in Verfahrensschritt 621 wird der Antrag abgeschlossen. In Verfahrensschritt 623 werden die signierten Personendaten erhalten, in Verfahrensschritt 625 wird ein Produktionsauftrag erzeugt und gesendet, und in Verfahrensschritt 627 wird ein PIN/PUK-Druck durchgeführt. In Verfahrensschritt 629 wird der Produktionsauftrag erhalten, und in Verfahrensschritt 631 wird das Dokument und/oder Token personalisiert. In Verfahrensschritt 633 wird ein Authentifizierungs-Schlüsselpaar erzeugt, in Verfahrensschritt 635 wird ein Signatur-Schlüsselpaar erzeugt, und in Verfahrensschritt 637 wird optional eine Chipseriennummer (Integrated Circuit Card Serial Number, ICCSN) ausgelesen. In Verfahrensschritt 639 wird ein Transportzertifikat erzeugt, in Verfahrensschritt 641 wird ein Signatur-CSR mit der Chipseriennummer (Integrated Circuit Card Serial Number, ICCSN) und den signierten Personendaten erzeugt, und in Verfahrensschritt 643 wird das Signatur-CSR mit dem Transportzertifikat oder Gütesiegel signiert. In Verfahrensschritt 645 wird das Signatur-CSR auf dem Dokument gespeichert, gegebenenfalls mit Transportzertifikat, in Verfahrensschritt 647 wird ein Authentifizierungs-CSR mit Referenz auf das Signatur-CSR erzeugt, wodurch keine doppelte Speicherung der Daten im Dokument durchgeführt wird, und in Verfahrensschritt 649 wird ein Verschlüsselungs-CSR erzeugt. In Verfahrensschritt 651 wird ein Ausgangsdatenartefakt erzeugt, beispielsweise eine PIN/PUK, und in Verfahrensschritt 653 wird das Ausgangsdatenartefakt zurückgegeben.

Die Verfahrensschritte 655-673 bilden das Verfahren 400 zum Bereitstellen eines digitalen Zertifikats eines Nutzers. In Verfahrensschritt 655 wird ein Bereitstellen oder Aufspielen der Zertifikate eingeleitet, in Verfahrensschritt 657 werden die Zertifikatsanfragen übermittelt, in Verfahrensschritt 659 wird ein Secure-Messaging (SM) Kanal aufgebaut, und in Verfahrensschritt 661 wird eine PIN gesetzt. In Verfahrensschritt 663 werden die Zertifikatsanfragen erhalten, in Verfahrensschritt 665 wird das Signatur-Zertifikat erzeugt, in Verfahrensschritt 667 wird das Authentifizierungs-Zertifikat erzeugt, in Verfahrensschritt 669 wird ein Verschlüsselungs-Schlüsselpaar erzeugt, in Verfahrensschritt 671 wird das Verschlüsselungs-Zertifikat erzeugt, und in Verfahrensschritt 673 werden die Zertifikate eingebracht.

Im Folgenden werden weitere Ausführungsbeispiele des Zertifikats-Tokens 100, des Verfahrens 400 zum Bereitstellen eines digitalen Zertifikats eines Nutzers, und des Verfahrens 500 zum Herstellen eines Zertifikats-Tokens eines Nutzers erläutert.

Die Erfindung kann zur dezentralen Beantragung von fortgeschrittenen und/oder qualifizierten digitalen Zertifikaten eingesetzt werden. Für die Bereitstellung oder Ausstellung von digitalen Zertifikaten kann der Nutzer oder Antragsteller mit seinen Personendaten identifiziert werden. Dieser Prozess, welcher auch als Registrierung bezeichnet wird, kann anhand papiergebundener Antragsunterlagen mit persönlicher Identifizierung des Nutzers bei einem Zertifizierungsdienst oder Zertifizierungsdiensteanbieter (ZDA), oder durch einen anderen Berechtigten erfolgen, beispielsweise mittels eines Post-basierten Identifikationsverfahrens, oder unter Verwendung einer eID-Funktion eines Identifikationsdokumentes, beispielsweise eines neuen Personalausweises (nPA), womit eine persönliche Identifizierung ersetzt werden kann. Dabei können die Personendaten oder Daten zur Verarbeitung durch den Zertifizierungsdienst oder Zertifizierungsdiensteanbieter elektronisch aufgenommen und gespeichert werden.

Werden die Personendaten nicht durch den Zertifizierungsdienst oder Zertifizierungsdiensteanbieter erfasst, sondern durch eine berechtigte dritte Stelle, so können die Personendaten zur Produktionsvorbereitung an den Zertifizierungsdienst oder Zertifizierungsdiensteanbieter übermittelt werden. Bei der Übermittlung der Personendaten kann gewährleistet werden, dass die Personendaten nicht verfälscht oder manipuliert werden.

Zum Zeitpunkt der Produktion der digitalen Zertifikate für den Nutzer oder Antragsteller durch den elektronischen Zertifizierungsdienst oder Zertifizierungsdiensteanbieter können die Personendaten beim elektronischen Zertifizierungsdienst oder Zertifizierungsdiensteanbieter vorliegen und/oder als Teil einer Zertifikatsanfrage übermittelt werden. Dabei können die Personendaten bereits zum Zeitpunkt der elektronischen Personalisierung auf das Zertifikats-Token oder die Karte aufgebracht werden. Für ein Nachladen von digitalen Zertifikaten zu einem späteren Zeitpunkt können Verfahren eingesetzt werden, um die Personendaten zur Zertifikatsproduktion dann bereitzustellen, wenn das digitale Zertifikat produziert wird.

Zur Identifikation des Nutzers für ein Nachladeverfahren kann eine eID-Funktion eines Identifikationsdokumentes, beispielsweise eines neuen Personalausweises (nPA), verwendet werden. Ferner können Verfahren eingesetzt werden, um digitale Zertifikate auf Zertifikats-Token oder Chipkarten nachzuladen. Die Authentizität eines Zertifikats-Tokens oder der Karte kann beispielsweise unter Verwendung von Transportzertifikaten oder Gütesiegeln, oder unter Verwendung von Public-Key-Infrastruktur (PKI) basierter Authentisierung, beispielsweise mittels Secure Messaging oder mittels eines Einbringens von Vertrauensankern, geprüft werden.

Die zur Produktion von digitalen Zertifikaten verwendeten Personendaten und/oder kryptographischen Schlüssel brauchen bis zum Produktionszeitpunkt auch nicht an den elektronischen Zertifizierungsdienst oder Zertifizierungsdiensteanbieter weitergeleitet werden. Das bedeutet, dass die Personendaten und/oder kryptographischen Schlüssel manipulationsgeschützt aufbewahrt und erst zum Zeitpunkt der Zertifikatsproduktion an den elektronischen Zertifizierungsdienst oder Zertifizierungsdiensteanbieter gesendet werden. Das Speichern oder Aufbringen der digitalen Zertifikate auf das Zertifikats-Token kann durch den Nutzer selbst im Feld erfolgen. Dazu kann der Nutzer oder Anwender in die Lage versetzt werden, dem elektronischen Zertifizierungsdienst oder Zertifizierungsdiensteanbieter die Personendaten und/oder kryptographischen Schlüssel weiterzuleiten.

Dazu kann eine Vorgehensweise eingesetzt werden, die es ermöglicht, bereits erfasste Personendaten oder Identifikationsdaten derart aufzubereiten und zu speichern, dass die Personendaten oder Identifikationsdaten erst zum Produktionszeitpunkt an den elektronischen Zertifizierungsdienst oder Zertifizierungsdiensteanbieter geleitet werden und trotzdem eine Zuordnung von Nutzer oder Antragsteller zum verwendeten Zertifikats-Token möglich ist.

Die Vorgehensweise, wie das Zertifikats-Token in den Besitz des Nutzers oder Antragstellers gelangt und später mit digitalen Zertifikaten versehen wird, ist wie folgt. Der Nutzer oder Antragsteller wird beispielsweise von Identifikationsmitarbeitern eines Identifizierungsdienstes oder einer Registrierungsstelle identifiziert, beispielsweise durch Vorlage eines Identifikationsdokumentes oder Ausweises, durch die Verwendung einer eID-Funktion eines Identifikationsdokumentes, beispielsweise eines elektronischen neuen Personalausweises (nPA), durch die Verwendung eines Post-basierten Identifikationsverfahrens, oder eines gleichartigen Verfahrens.

Die dabei erhobenen Personendaten oder Identifikationsdaten können gegen Manipulation geschützt werden. Dieses kann in elektronisch signierter Form erfolgen. Es können eine oder mehrere Signaturen verwendet werden. Die Signatur kann von Mitarbeitern, beispielsweise von Identifizierungsmitarbeitern, geleistet werden oder von technischen Komponenten, beispielsweise Maschinen- oder Stapelsignaturen. Die Personendaten können optional mit einem Zeitstempel versehen werden. Mögliche Datenformate sind beispielsweise signierte XML-Dateien oder Dateien im CMS Format (Cryptographic Message Syntax) oder im PKCS#7 Format.

Diese Personendaten werden zum Zeitpunkt, zu dem das Zertifikats-Token produziert wird, vom Produktionssystem in das Zertifikats-Token selbst eingebracht. Dabei wird vom Produktionssystem eine manipulationsgeschützte Zuordnung vom verwendeten öffentlichen Schlüssel des Zertifikats-Tokens zu den oben genannten erstellten Personendaten getroffen. Optional kann, im Falle von Hardware-Zertifikats-Token, eine eindeutige Identifikationskennung des Hardware-Zertifikats-Tokens, beispielsweise eine Chipseriennummer oder ICCSN, in die Zuordnung aufgenommen werden. Weitere produktionsrelevante Daten können ebenfalls aufgenommen werden. Gemäß einer Ausführungsform wird dadurch ein Anforderungsdatensatz zum Bereitstellen eines digitalen Zertifikats gebildet. Die manipulationsgeschützte Zuordnung erfolgt durch kryptographische Verfahren, beispielsweise eine elektronische Signatur.

Das Produktionssystem signiert den Anforderungsdatensatz oder die Daten direkt oder eine Referenz auf den Anforderungsdatensatz oder die Daten, beispielsweise einen kryptographischen Hashwert des Anforderungsdatensatzes oder der Daten. Das Format des signierten Anforderungsdatensatzes oder der signierten Daten kann beispielsweise ein Transportzertifikat sein, beispielsweise konform zum X.509 Standard, oder ein PKCS#7 Format oder ein Cryptographic Message Syntax (CMS) Format. Der vom Produktionssystem verwendete private Signaturschlüssel kann in einem Hardware Security Modul (HSM) abgelegt sein.

Dem Nutzer oder Besitzer kann das Zertifikats-Token ausgehändigt werden. Dabei kann mindestens ein digitales End-Entity-Zertifikat noch nicht auf dem Zertifikats-Token enthalten sein. Dieses kann durch den Nutzer oder Besitzer zu einem späteren Zeitpunkt auf das Zertifikats-Token nachgeladen werden.

Der Nutzer oder Besitzer möchte nun ein digitales Zertifikat zu einem auf dem Zertifikats-Token befindlichen kryptographischen Schlüssel erstellen. Dazu werden die vom Produktionssystem signierten Anforderungsdatensätze oder Daten und gegebenenfalls alle dort referenzierten Anforderungsdatensätze oder Daten aus dem Zertifikats-Token ausgelesen und an den elektronischen Zertifizierungsdienst oder Zertifizierungsdiensteanbieter übermittelt. Der Nutzer oder Anwender kann bei diesem Vorgang durch entsprechende Computerprogramme unterstützt werden.

Der elektronische Zertifizierungsdienst oder Zertifizierungsdiensteanbieter erstellt das digitale Zertifikat oder die digitalen Zertifikate und übermittelt diese zurück an den Nutzer oder Anwender. Die digitalen Zertifikate werden in das Zertifikats-Token eingebracht. Optional können dabei die vom Produktionssystem gespeicherten Anforderungsdatensätze oder Daten überschrieben und/oder gelöscht werden.

Das Verfahren kann für ein oder mehrere digitale Zertifikate genutzt werden. Im Falle mehrerer digitaler Zertifikate kann auch die erfolgte Zuordnung von Personendaten oder Identifikationsdaten zum Zertifikats-Token und/oder zum öffentlichen Schlüssel referenziert werden, um die Personendaten oder Identifikationsdaten nicht komplett erneut zuzuordnen. Die Kommunikation mit dem Zertifikats-Token kann durch kryptographische Verfahren, wie beispielsweise Secure Messaging (SM), geschützt erfolgen.

Dadurch können mehrere Vorteile erreicht werden. Fortgeschrittene und qualifizierte digitale Zertifikate können dezentral bereitgestellt oder beantragt werden ohne einen erneuten Identitätsnachweis des Nutzers durchzuführen, da der elektronische Zertifizierungsdienst oder das Trustcenter die Signatur der Personendaten oder RA-Daten, des Anforderungsdatensatzes, und/oder der Produktionsdaten, mit gegebenenfalls dort referenzierten Anforderungsdatensätzen oder Daten, überprüfen kann und somit die Zugehörigkeit der Personendaten zu dem Zertifikats-Token und zu dem digitalen Zertifikat gewährleistet werden kann.

Zudem erhält der elektronische Zertifizierungsdienst oder Zertifizierungsdiensteanbieter erst zum Zeitpunkt der Produktion des digitalen Zertifikats von den Personendaten oder Identifikationsdaten Kenntnis. Die Personendaten oder Identifikationsdaten verbleiben bis dahin unter Kontrolle des Identifizierungsdienstes, der identifizierenden Stelle, und/oder des Nutzers oder Inhabers des Zertifikats-Tokens.

Darüber hinaus transportiert der Identifizierungsdienst oder die identifizierende Stelle keine weiteren Daten zum elektronischen Zertifizierungsdienst oder Zertifizierungsdiensteanbieter und hält auch keine Personendaten oder Identifikationsdaten über längere Zeit vor. Der Identifizierungsdienst oder die identifizierende Stelle speichert somit keine Personendaten oder Identifikationsdaten. Zudem können einmal erhobene Personendaten, Identifikationsdaten oder Registrierungsdaten je nach Nachlade-Dienstleister von verschiedenen elektronischen Zertifizierungsdiensten oder Zertifizierungsdiensteanbietern genutzt werden. Dem Nutzer oder Antragsteller steht es dabei frei, sich zum Nachladezeitpunkt an einen elektronischen Zertifizierungsdienst oder Zertifizierungsdiensteanbieter seiner Wahl zu wenden.

### BEZUGSZEICHENLISTE

- 100: Zertifikats-Token zum Bereitstellen eines digitalen Zertifikats eines Nutzers
- 101: Speicher
- 103: Kommunikationsschnittstelle

- 200: System zum Bereitstellen eines digitalen Zertifikats eines Nutzers
- 201: Elektronischer Zertifizierungsdienst
- 203: Kommunikationsnetzwerk

- 300: System zum Herstellen eines Zertifikats-Tokens eines Nutzers
- 301: Identifizierungsdienst
- 303: Produktionssystem

- 400: Verfahren zum Bereitstellen eines digitalen Zertifikats eines Nutzers
- 401: Bereitstellen des Anforderungsdatensatzes
- 403: Übertragen des bereitgestellten Anforderungsdatensatzes
- 405: Erzeugen des digitalen Zertifikats des Nutzers
- 407: Aussenden des digitalen Zertifikats des Nutzers
- 409: Speichern des digitalen Zertifikats des Nutzers

- 500: Verfahren zum Herstellen eines Zertifikats-Tokens eines Nutzers
- 501: Signieren des Personendatums des Nutzers
- 503: Erzeugen eines öffentlichen Zertifikatsschlüssels
- 505: Erzeugen eines Anforderungsdatensatzes
- 507: Speichern des Anforderungsdatensatzes

- 601: Erfassungseinrichtung
- 603: RA-Client
- 605: Personalisierungsmanagementeinrichtung
- 607: Personalisierungseinrichtung
- 609: Dokument
- 611: Signaturserver
- 613: Middleware
- 615: Trustcenter
- 617-673: Verfahrensschritte

## Patentansprüche

1. Zertifikats-Token (100) zum Bereitstellen eines digitalen Zertifikats eines Nutzers, mit:
einem Speicher (101), welcher einen Anforderungsdatensatz zur Übermittlung des digitalen Zertifikats des Nutzers umfasst, wobei der Anforderungsdatensatz ein signiertes Personendatum des Nutzers und einen öffentlichen Zertifikatsschlüssel des digitalen Zertifikats umfasst; und
einer Kommunikationsschnittstelle (103), welche ausgebildet ist, den Anforderungsdatensatz für die Übermittlung über ein Kommunikationsnetzwerk (203) an einen elektronischen Zertifizierungsdienst (201) bereitzustellen, und das digitale Zertifikat des Nutzers von dem elektronischen Zertifizierungsdienst (201) zu empfangen, um das digitale Zertifikat bereitzustellen, **dadurch gekennzeichnet, dass** der Anforderungsdatensatz mit einem privaten Signaturschlüssel eines Produktionssystems (303), mit dem das Zertifikats-Token (100) hergestellt wurde, signiert ist.

2. Zertifikats-Token (100) nach Anspruch 1, wobei das signierte Personendatum mit einem privaten Signaturschlüssel eines Identifizierungsdienstes (301) zum Identifizieren des Nutzers signiert ist.

3. Zertifikats-Token (100) nach einem der vorstehenden Ansprüche, wobei der Speicher (101) ferner einen privaten Zertifikatsschlüssel des digitalen Zertifikats umfasst, und wobei der private Zertifikatsschlüssel und der öffentliche Zertifikatsschlüssel ein kryptographisches Schlüsselpaar bilden.

4. Zertifikats-Token (100) nach einem der vorstehenden Ansprüche, wobei dem Zertifikats-Token (100) eine Identifikationskennung zugeordnet ist, und wobei der Anforderungsdatensatz die Identifikationskennung des Zertifikats-Tokens (100) umfasst.

5. Zertifikats-Token (100) nach einem der vorstehenden Ansprüche, wobei der Speicher (101) ferner einen weiteren Anforderungsdatensatz zur Übermittlung eines weiteren digitalen Zertifikats des Nutzers umfasst, und wobei das signierte Personendatum des Nutzers ferner dem weiteren Anforderungsdatensatz zugeordnet ist.

6. Zertifikats-Token (100) nach einem der vorstehenden Ansprüche, wobei das Zertifikats-Token (100) ausgebildet ist, den öffentlichen Zertifikatsschlüssel des digitalen Zertifikats zu erzeugen.

7. Verfahren (400) zum Bereitstellen eines digitalen Zertifikats eines Nutzers unter Verwendung des Zertifikats-Tokens (100) und eines elektronischen Zertifizierungsdienstes (201), wobei das Zertifikats-Token (100) einen Speicher (101) umfasst, welcher einen Anforderungsdatensatz zur Übermittlung des digitalen Zertifikats des Nutzers umfasst, wobei der Anforderungsdatensatz ein signiertes Personendatum des Nutzers und einen öffentlichen Zertifikatsschlüssel des digitalen Zertifikats umfasst, wobei das Zertifikats-Token (100) ferner eine Kommunikationsschnittstelle (103) umfasst, welche ausgebildet ist, den Anforderungsdatensatz für die Übermittlung über ein Kommunikationsnetzwerk (203) an den elektronischen Zertifizierungsdienst (201) bereitzustellen, und das digitale Zertifikat des Nutzers von dem elektronischen Zertifizierungsdienst (201) zu empfangen, um das digitale Zertifikat bereitzustellen, und wobei das Verfahren (400) die folgenden Schritte umfasst:
Bereitstellen (401) des Anforderungsdatensatzes durch die Kommunikationsschnittstelle (103) des Zertifikats-Tokens (100);
Übertragen (403) des bereitgestellten Anforderungsdatensatzes zu dem elektronischen Zertifizierungsdienst (201) über das Kommunikationsnetzwerk (203);
Erzeugen (405) des digitalen Zertifikats des Nutzers durch den elektronischen Zertifizierungsdienst (201) auf Basis des Anforderungsdatensatzes;
Aussenden (407) des digitalen Zertifikats des Nutzers durch den elektronischen Zertifizierungsdienst (201) an das Zertifikats-Token (100); und
Speichern (409) des digitalen Zertifikats des Nutzers in dem Speicher (101) des Zertifikats-Tokens (100), **dadurch gekennzeichnet, dass** der Anforderungsdatensatz mit einem privaten Signaturschlüssel eines Produktionssystems (303), mit dem das Zertifikats-Token (100) hergestellt wurde, signiert ist, und wobei das Erzeugen (405) des digitalen Zertifikats des Nutzers durch den elektronischen Zertifizierungsdienst (201) ein Verifizieren des Anforderungsdatensatzes mittels eines öffentlichen Signaturprüfschlüssels des Produktionssystems (303) durch den elektronischen Zertifizierungsdienst (201) umfasst.

8. Verfahren (400) nach Anspruch 7, wobei der bereitgestellte Anforderungsdatensatz im Schritt des Bereitstellens (401) an den elektronischen Zertifizierungsdienst (201) über das Kommunikationsnetzwerk (203) durch die Kommunikationsschnittstelle (103) ausgesendet wird, oder wobei der bereitgestellte Anforderungsdatensatz im Schritt des Bereitstellens (401) durch den elektronischen Zertifizierungsdienst (201) über das Kommunikationsnetzwerk (203) über die Kommunikationsschnittstelle (103) ausgelesen wird.

9. Verfahren (400) nach Anspruch 7 oder 8, wobei das signierte Personendatum mit einem privaten Signaturschlüssel eines Identifizierungsdienstes (301) zum Identifizieren des Nutzers signiert ist, und wobei das Erzeugen (405) des digitalen Zertifikats des Nutzers durch den elektronischen Zertifizierungsdienst (201) ein Verifizieren des signierten Personendatums des Nutzers mittels eines öffentlichen Signaturprüfschlüssels des Identifizierungsdienstes (301) durch den elektronischen Zertifizierungsdienst (201) umfasst.

10. Verfahren (500) zum Herstellen eines Zertifikats-Tokens (100) eines Nutzers unter Verwendung eines Identifizierungsdienstes (301) und eines Produktionssystems (303), wobei dem Nutzer ein Personendatum zugeordnet ist, mit:
Signieren (501) des Personendatums des Nutzers durch den Identifizierungsdienst (301) mit einem privaten Signaturschlüssels des Identifizierungsdienstes (301), um ein signiertes Personendatum des Nutzers zu erhalten;
Erzeugen (503) eines öffentlichen Zertifikatsschlüssels eines digitalen Zertifikats;
Erzeugen (505) eines Anforderungsdatensatzes durch das Produktionssystem (303), wobei der Anforderungsdatensatz das signierte Personendatum des Nutzers und den öffentlichen Zertifikatsschlüssel des digitalen Zertifikats umfasst; und
Speichern (507) des Anforderungsdatensatzes in dem Zertifikats-Token (100) durch das Produktionssystem (303), um das Zertifikats-Token (100) herzustellen, **dadurch gekennzeichnet, dass** das
Erzeugen (505) des Anforderungsdatensatzes durch das Produktionssystem (303) ein Signieren des Anforderungsdatensatzes durch das Produktionssystem (303) mit einem privaten Signaturschlüssel des Produktionssystems (303) umfasst.

11. Verfahren (500) nach Anspruch 10, wobei das Verfahren (500) ein Auslesen einer Identifikationskennung des Zertifikats-Tokens (100) durch das Produktionssystem (303) aus dem Zertifikats-Token (100) umfasst, und wobei das Erzeugen (505) des Anforderungsdatensatzes durch das Produktionssystem (303) unter Verwendung der Identifikationskennung des Zertifikats-Tokens (100) durchgeführt wird.

12. Verfahren (500) nach Anspruch 10 oder 11, wobei das Erzeugen (503) des öffentlichen Zertifikatsschlüssels des digitalen Zertifikats durch das Zertifikats-Token (100) durchgeführt wird, und wobei das Verfahren (500) ferner ein Übertragen des erzeugten öffentlichen Zertifikatsschlüssels von dem Zertifikats-Token (100) an das Produktionssystem (303) umfasst.

13. Computerprogramm mit einem Programmcode zum Ausführen des Verfahrens (400) zum Bereitstellen eines digitalen Zertifikats eines Nutzers nach Anspruch 7 bis 9, wenn der Programmcode auf einem Computer ausgeführt wird.

## Claims

1. Certificate token (100) for providing a digital certificate of a user, the certificate token (100) comprising:
a memory (101) which comprises a request data record for transmitting the digital certificate of the user, the request data record comprising a signed personal date of the user and a public certificate key of the digital certificate; and
a communication interface (103) which is configured to provide the request data record for transmission via a communication network (203) to an electronic certification service (201) and to receive the digital certificate of the user from the electronic certification service (201) in order to provide the digital certificate,
**characterized in that**
the request data record is signed with a private signature key of a production system (303) with which the certificate token (100) was produced.

2. Certificate token (100) according to claim 1, wherein the signed personal date is signed with a private signature key of an identification service (301) for identifying the user.

3. Certificate token (100) according to one of the preceding claims, wherein the memory (101) further comprises a private certificate key of the digital certificate, and wherein the private certificate key and the public certificate key form a cryptographic key pair.

4. Certificate token (100) according to one of the preceding claims, wherein the certificate token (100) is assigned an identification identifier, and wherein the request data record comprises the identification identifier of the certificate token (100).

5. Certificate token (100) according to one of the preceding claims, wherein the memory (101) further comprises a further request data record for transmitting a further digital certificate of the user, and wherein the signed personal data of the user is further assigned to the further request data record.

6. Certificate token (100) according to one of the preceding claims, wherein the certificate token (100) is configured to generate the public certificate key of the digital certificate.

7. A method (400) for providing a digital certificate for a user using the certificate token (100) and an electronic certification service (201), the certificate token (100) comprising a memory (101) which comprises a request data record for transmission of the digital certificate of the user, the request data record comprising a signed personal date of the user and a public certificate key of the digital certificate, the certificate token (100) further comprising a communication interface (103) which is configured to provide the request data record for the transmission via a communication network (203) to the electronic certification service (201) and to receive the digital certificate of the user from the electronic certification service (201) to provide the digital certificate, and wherein the method (400) comprises the following steps:
providing (401) the request data record by the communication interface (103) of the certificate token (100);
transmitting (403) the provided request data record to the electronic certification service (201) via the communication network (203);
generating (405) the digital certificate of the user by the electronic certification service (201) based on the request data record;
sending (407) the digital certificate of the user through the electronic certification service (201) to the certificate token (100); and
storing (409) the digital certificate of the user in the memory (101) of the certificate token (100),
**characterized in that**
the request data record is signed with a private signature key of a production system (303) with which the certificate token (100) was produced, and wherein the generation (405) of the digital certificate of the user by the electronic certification service (201) comprises a verification of the request data record by means of a public signature verification key of the production system (303) by the electronic certification service (201).

8. The method (400) according to claim 7, wherein in the step of providing (401) the provided request data record is sent out via the communication network (203) through the communication interface (103), or wherein in the step of providing (401) the provided request data record is read by the electronic certification service (201) via the communication network (203) via the communication interface (103).

9. The method (400) according to claim 7 or 8, wherein the signed personal date is signed with a private signature key of an identification service (301) for identifying the user, and wherein the generation (405) of the digital certificate of the user by the electronic certification service (201) comprises a verification of the signed personal data of the user by means of a public signature verification key of the identification service (301) by the electronic certification service (201).

10. A method (500) for producing a certificate token (100) of a user using an identification service (301) and a production system (303), the user being assigned a personal data, the method comprising:
signing (501) the personal data of the user by the identification service (301) with a private signature key of the identification service (301) in order to obtain a signed personal date of the user;
generating (503) a public certificate key of a digital certificate;
generating (505) a request data record by the production system (303), the request data record comprising the signed personal date of the user and the public certificate key of the digital certificate; and
storing (507) the request data record in the certificate token (100) by the production system (303) in order to produce the certificate token (100),
**characterized in that**
generating (505) the request data record by the production system (303) comprises signing the request data record by the production system (303) with a private signature key of the production system (303).

11. The method (500) according to claim 10, wherein the method (500) comprises reading an identification identifier of the certificate token (100) by the production system (303) from the certificate token (100), and wherein generating (505) of the request data record is carried out by the production system (303) using the identification identifier of the certificate token (100).

12. The method (500) according to claim 10 or 11, wherein the generation (503) of the public certificate key of the digital certificate is performed by the certificate token (100), and wherein the method (500) further comprises transmitting the generated public certificate key from the certificate token (100) to the production system (303).

13. Computer program with a program code for executing the method (400) for providing a digital certificate of a user according to any of claims 7 to 9, when the program code is executed on a computer.

## Revendications

1. Jeton de certificat (100) destiné à fournir un certificat numérique d'un utilisateur comprenant :
une mémoire (101), laquelle comporte un jeu de données de demande servant à communiquer le certificat numérique de l'utilisateur, le jeu de données de demande comportant une donnée personnelle signée de l'utilisateur et une clé de certificat publique du certificat numérique ; et
une interface de communication (103), laquelle est configurée pour fournir le jeu de données de demande à un service de certification électronique (201) pour la communication par le biais d'un réseau de communication (203), et pour recevoir le certificat numérique de l'utilisateur de la part du service de certification électronique (201) afin de fournir le certificat numérique,
**caractérisé en ce que**
le jeu de données de demande est signé avec une clé de signature numérique d'un système de production (303) avec lequel le jeton de certificat (100) a été créé.

2. Jeton de certificat (100) selon la revendication 1, la donnée personnelle signée étant signée avec une clé de signature privée d'un service d'identification (301) pour identifier l'utilisateur.

3. Jeton de certificat (100) selon l'une des revendications précédentes, la mémoire (101) comportant en outre une clé de certificat privée du certificat numérique, et la clé de certificat privée et la clé de certificat publique formant une paire de clés cryptographique.

4. Jeton de certificat (100) selon l'une des revendications précédentes, un marquage d'identification étant associé au jeton de certificat (100), et le jeu de données de demande comprenant le marquage d'identification du jeton de certificat (100).

5. Jeton de certificat (100) selon l'une des revendications précédentes, la mémoire (101) comportant en outre un jeu de données de demande supplémentaire pour la communication d'un certificat numérique supplémentaire de l'utilisateur, et la donnée personnelle signée de l'utilisateur étant en outre associée au jeu de données de demande supplémentaire.

6. Jeton de certificat (100) selon l'une des revendications précédentes, le jeton de certificat (100) étant configuré pour générer la clé de certificat publique du certificat numérique.

7. Procédé (400) de fourniture d'un certificat numérique d'un utilisateur en utilisant le jeton de certificat (100) et un service de certification électronique (201), le jeton de certificat (100) comprenant une mémoire (101), laquelle comporte un jeu de données de demande servant à communiquer le certificat numérique de l'utilisateur, le jeu de données de demande comportant une donnée personnelle signée de l'utilisateur et une clé de certificat publique du certificat numérique, le jeton de certificat (100) comprenant en outre une interface de communication (103), laquelle est configurée pour fournir le jeu de données de demande au service de certification électronique (201) pour la communication par le biais d'un réseau de communication (203), et pour recevoir le certificat numérique de l'utilisateur de la part du service de certification électronique (201) afin de fournir le certificat numérique, et le procédé (400) comprenant les étapes suivantes :
fourniture (401) du jeu de données de demande par l'interface de communication (103) du jeton de certificat (100) ;
transmission (403) du jeu de données de demande fourni au service de certification électronique (201) par le biais du réseau de communication (203) ;
génération (405) du certificat numérique de l'utilisateur par le service de certification électronique (201) ;
envoi (407) du certificat numérique de l'utilisateur par le service de certification électronique (201) au jeton de certificat (100) ; et
mémorisation (409) du certificat numérique de l'utilisateur dans la mémoire (101) du jeton de certificat (100),
**caractérisé en ce que**
le jeu de données de demande est signé avec une clé de signature numérique d'un système de production (303) avec lequel le jeton de certificat (100) a été créé et la génération (405) du certificat numérique de l'utilisateur par le service de certification électronique (201) comprenant une vérification du jeu de données de demande au moyen d'une clé de contrôle de signature publique du système de production (303) par le service de certification électronique (201).

8. Procédé (400) selon la revendication 7, le jeu de données de demande fourni à l'étape de fourniture (401) étant envoyé au service de certification électronique (201) par le biais du réseau de communication (203) à travers l'interface de communication (103), et le jeu de données de demande fourni à l'étape de fourniture (401) étant lu par le service de certification électronique (201) par le biais du réseau de communication (203) par le biais de l'interface de communication (103).

9. Procédé (400) selon la revendication 7 ou 8, la donnée personnelle signée étant signée avec une clé de signature privée d'un service d'identification (301) pour identifier l'utilisateur et la génération (405) du certificat numérique de l'utilisateur par le service de certification électronique (201) comprenant une vérification de la donnée personnelle signée de l'utilisateur au moyen d'une clé de contrôle de signature publique du service d'identification (301) par le service de certification électronique (201).

10. Procédé (500) de création d'un jeton de certificat (100) d'un utilisateur en utilisant un service d'identification (301) et un système de production (303), une donnée personnelle étant associée à l'utilisateur, comprenant :
signature (501) de la donnée personnelle de l'utilisateur par le service d'identification (301) avec une clé de signature privée du service d'identification (301) afin d'obtenir une donnée personnelle signée de l'utilisateur ;
génération (503) d'une clé de certificat publique d'un certificat numérique ;
génération (505) d'un jeu de données de demande par le système de production (303), le jeu de données de demande comprenant la donnée personnelle signée de l'utilisateur et la clé de signature publique du certificat numérique ; et
mémorisation (507) du jeu de données de demande dans le jeton de certificat (100) par le système de production (303) afin de créer le jeton de certificat (100), **caractérisé en ce que**
la génération (505) du jeu de données de demande par le système de production (303) comprend une signature du jeu de données de demande par le système de production (303) avec une clé de signature privée du système de production (303) .

11. Procédé (500) selon la revendication 10, le procédé (500) comprenant une lecture d'un marquage d'identification du jeton de certificat (100) par le système de production (303) à partir du jeton de certificat (100), et la génération (505) du jeu de données de demande par le système de production (303) étant effectuée en utilisant le marquage d'identification du jeton de certificat (100).

12. Procédé (500) selon la revendication 10 ou 11, la génération (503) de la clé de certificat publique du certificat numérique étant effectuée par le jeton de certificat (100) et le procédé (500) comprenant en outre une transmission de la clé de certificat publique générée par le jeton de certificat (100) au système de production (303) .

13. Programme informatique comprenant un code de programme pour mettre en œuvre le procédé (400) de fourniture d'un certificat numérique d'un utilisateur selon les revendications 7 à 9 lorsque le code de programme est exécuté sur un ordinateur.
